# EUROPÄISCHE PATENTSCHRIFT

(11) **EP 0 927 365 B1**
(45) Veröffentlichungstag und Bekanntmachung des Hinweises auf die Patenterteilung: **02.01.2002**
(21) Anmeldenummer: 97939931.8
(22) Anmeldetag: 19.09.1997
(51) Int. Cl.: G01S 15/58, G01S 7/521, G01S 7/64

(54) **GESCHWINDIGKEITSMESSGERÄT FÜR OBJEKTE VERSCHIEDENER ART**
DEVICE FOR MEASURING THE VELOCITY OF A VARIETY OF OBJECTS
DISPOSITIF POUR MESURER LA VITESSE D'OBJETS VARIES

(30) Priorität: 23.09.1996 CH 231796
(43) Veröffentlichungstag der Anmeldung: 07.07.1999
(73) Patentinhaber: Unitron Electronics AG, 4702 Oensingen (CH)
(72) Erfinder: NUSSBAUMER, Marcel, CH-4713 Matzendorf (CH); SCHOENENBERG, Beat, CH-4612 Wangen (CH)
(74) Vertreter: Volpert, Marcus, Dr.
(86) Internationale Anmeldenummer: CH9700355
(87) Internationale Veröffentlichungsnummer: WO9813705

(56) Entgegenhaltungen:
- GB-A- 1 517 602
- US-A- 3 986 182
- US-A- 4 035 760
- US-A- 5 231 393
- US-A- 5 561 641

## Beschreibung

Die Erfindung betrifft ein Geschwindigkeitsmessgerät für Objekte verschiedener Art gemäss dem Patentanspruch 1.

In den verschiedensten Gebieten, wie zum Beispiel in der Flugsicherung, bei der Überwachung des Strassenverkehrs, in der Industrie oder im Sport, stellt sich die Aufgabe, die Geschwindigkeit von bewegten Objekten zu messen.
Im Navigationsdienst der Flugsicherung und bei der Geschwindigkeitsüberwachung im Strassenverkehr werden unter anderem Doppler-Radarmessgeräte eingesetzt. Diese Radarmessgeräte arbeiten mit elektromagnetischen Wellen. Sie bestehen im wesentlichen aus einem Sende-, einem Empfangs- und einem Anzeigeteil. Die von der Sendeantenne ausgehenden elektromagnetischen Wellen werden mittels Parabol-Reflektoren zu einem keulenförmigen Strahlungsfeld gebündelt und auf das abzutastende Raumgebiet gerichtet. Gegenstände, die sich in diesem Strahlungsfeld befinden, werfen die auf sie auftreffenden Wellen zurück, so dass ein Teil der ausgesandten Energie die Empfangsantenne wieder erreicht. Im Empfänger wird diese Strahlung zu einem auswertbaren elektrischen Signal verstärkt und zur Meldung des Gegenstandes dem Anzeigeteil, in der Regel einem Leuchtschirm, zugeführt. Durch den Vergleich der Sendefrequenz mit der durch den Doppler-Effekt veränderten Echo-Frequenz lässt sich der Bewegungszustand (Geschwindigkeit und Bewegungsrichtung) eines angepeilten Objekts bestimmen. Ein Doppler-Radarmessgerät und ein entsprechendes Messverfahren werden beispielsweise von der Patentschrift EP 0 424 704 (Veröffentlichungsdatum 02.05.1991) beschrieben. Derartige Radargeräte erlauben zwar eine sehr genaue Bestimmung der Geschwindigkeit eines Objektes, ihr Anschaffungspreis ist jedoch sehr hoch.
Im weiteren sind optische Geschwindigkeitsmessvorrichtungen und -verfahren bekannt. Die Patentschrift CH 656 009 (Veröffentlichungsdatum 30.05.1986) schlägt beispielsweise ein Messverfahren vor, bei welchem auf das zu messende Objekt durch Folgen optischer Impulse gebildete Messstrahlen gerichtet werden. Die vom bewegten Objekt reflektierten Messstrahstrahlen werden empfangen und ausgewertet. Aus der Laufzeit der Impulse vom Sender zum Objekte und von diesem zurück zum Empfänger werden Entfernungswerte, Entfernungsdifferenzen und Geschwindigkeitswerte gebildet. Derartige Messverfahren haben den Nachteil, dass für die Ermittlung der Geschwindigkeit aus den Laufzeiten der Impulse ein erheblicher Rechenaufwand notwendig ist.
Bekannt sind ausserdem Laser-Geschwindigkeitsmessgeräte, welche den Doppler-Effekt ausnützen. Derartige Laser-Geschwindigkeitsmessgeräte sind Gegenstand der Patentschriften US 5,502,558 (Veröffentlichungsdatum 26.03.1996) und WO 92/06389 (Veröffentlichungsdatum 16. 04.1992).
Sowohl beim erwähnten optischen Geschwindigkeitsmessverfahren als auch bei den erwähnten Laser-Geschwindigkeitsmessgeräten werden die Messstrahlen stark gebündelt, und eignen sie sich daher nicht für kleine, relativ weit entfernte Objekte. Das zu messende Objekt muss ausserdem Oberflächenbereiche aufweisen, welche die optischen Impulse bzw. den Laserstrahl genügend stark reflektieren. Derartige Messverfahren und Messgeräte sind daher für den Einsatz im Ballsport ungeeignet.
Die Patentschrift EP 0 625 716 (Veröffentlichungsdatum 23.11.1994) beschreibt im weiteren eine Überwachungsvorrichtung für die Ermittlung von Flugeigenschaften bewegter Objekte, welche mit mindestens zwei Kameras arbeitet, die ein lichtempfindliches Messfeld aufweisen. Das bewegte Objekt ist mit mehreren Kontrastbereichen versehen. Das Licht, welches von diesen Kontrastbereichen ausgesandt wird, trifft auf die lichtempfindlichen Messfelder und erzeugt dort ein Lichtmuster, welches mit Hilfe einer Bilddigitalisierungsvorrichtung ausgewertet wird. In dieser Art und Weise kann der Weg des Objektes, dessen Geschwindigkeit und dessen Drall ermittelt werden. Diese Überwachungsvorrichtung ist sehr aufwendig und entsprechend kostspielig. Auch ihr Betrieb ist ziemlich umständlich, da mindestens zwei Kameras aufgestellt werden müssen. Ausserdem muss das Objekt mit geeigneten Kontrastbereichen versehen werden, damit die Messung überhaupt funktioniert.

Im weiteren sind verschiedene Geschwindigkeitsmessgeräte und - verfahren bekannt, welche mit Schallwellen arbeiten.

Es sind beispielsweise akustische Geschwindigkeitsmessgeräte bekannt, welche die Geschwindigkeit aufgrund der Laufzeit der Schallwellen ermitteln. Derartige Geräte sind Gegenstand der Patentschriften US 5,012,454 (Veröffentlichungsdatum 30.04.1991) und US 5,402,393 (Veröffentlichungsdatum 28.03.1995). Diese beiden Geräte haben nur sehr beschränkte Anwendungsbereiche. Das von der Patentschrift US 5,012,454 beschriebene Gerät ist lediglich für die Messung der Geschwindigkeit von Objekten, welche sich linear bewegen, geeignet, und das von der Patentschrift US 5,012,454 vorgeschlagene Gerät kann nur die Geschwindigkeit von Wasserfahrzeugen bestimmen.
Bekannt sind auch akustische Geschwindigkeitsmessverfahren, welche die Geschwindigkeit eines Objektes mit Hilfe der Phasenverschiebung von Schallwellen ermitteln. Ein derartiges Verfahren ist Gegenstand der Patentschrift US 5,381,384 (Veröffentlichungsdatum 10.01.1995). Es eignet sich ausschliesslich für die Ermittlung der Vertikal-Geschwindigkeit von Unterwasserfahrzeugen.
Im weiteren sind akustische Geschwindigkeitsmessvorrichtungen bekannt, welche die Geschwindigkeit eines bewegten Objektes mit Hilfe der durch den Doppler-Effekt bewirkten Frequenzverschiebungen ermitteln können. Derartige Geschwindigkeitsmessvorrichtungen sind beispielsweise Gegenstand der Patentschriften US 5,224,075 (Veröffentlichungsdatum 29.01.1993) und US 5,483,499 (Veröffentlichungsdatum 09. 01.1996). Die in der Patentschrift US 5,224,075 beschriebene Vorrichtung ist zur Messung der Geschwindigkeit von Strömungen in Gewässern vorgesehen. Sie umfasst zwei Geräte. Ein Gerät misst die Geschwindigkeit mit Hilfe der Phasenverschiebung, das zweite Gerät mit Hilfe der Frequenzverschiebung von Ultraschallsignalen. Mit einem Schalter kann zwischen den Geräten umgeschaltet werden. Diese Vorrichtung hat den Nachteil, dass sie sehr aufwendig und entsprechend teuer ist.
Ebenfalls sehr aufwendig ist die Vorrichtung, welche in der Patenschrift US 5,483,499 beschrieben ist. Sie dient dazu, von Wasserströmungen Strömungsprofile mit hoher Raum-Zeit-Auflösung zu erstellen. Sie arbeitet mit Hilfe eines gepulsten und phasencodierten, akustischen Signals.

Beim Sport wird die Geschwindigkeitsmessung zum Beispiel im Fussballtraining eingesetzt. Konkrete Trainingsziele von Fussballspielern sind beispielsweise die Verbesserung der Sprintgeschwindigkeit, der Sprungkraft, welche für Kopfballstösse von Bedeutung ist, der Ausdauer, der Schussgenauigkeit und der Schussgeschwindigkeit. Von diesen Trainingszielen ist die Schussgeschwindigkeit besonders schwierig zu messen. Unter der Schussgeschwindigkeit ist die Fluggeschwindigkeit des vom Spieler abgeschossenen Fussballes zu verstehen. Sie ist auch massgebend für die Flugweite des Fussballes. Ausserdem ist sie wichtig für Torschüsse. Je höher die Schussgeschwindigkeit ist, um so schlechter ist der Fussball für den gegnerischen Torhüter haltbar und um so höher ist die Torchance. Die Schussgeschwindigkeit ist von der Kraft abhängig, mit welcher der Fussballer den Fussball abstösst. Durch ein gezieltes Krafttraining, welches darauf ausgerichtet ist, die gesamte Muskelmasse der Beinmuskulatur zu vergrössern, lässt sich diese Abstosskraft erhöhen. Es ist wichtig, dass der Sportler die Möglichkeit hat, seine Leistungssteigerung während des Trainings ständig zu kontrollieren. Nur so kann er feststellen, ob seine Trainingsmethode geeignet ist, um sein Leistungsziel tatsächlich zu erreichen. Falls der gewünschte Trainingserfolg nicht eintritt, hat er dann die Möglichkeit, das Training zu intensivieren oder die Trainingsmethode zu wechseln. Nur wenn die Leistungssteigerung gemessen werden kann, ist eine optimale Gestaltung des Trainings möglich. Im Oberbegriff des Patentanspruchs 1 ist ausgegangen von der US-A-4 035 760. Dieses Messgerät ist kompliziert aufgebaut, da es neben mehreren Oszillatoren einen Impuls- oder Spitzengenerator sowie mehrere Sägezahn-Generatoren und eine Kathodenstrahlröhre aufweist. Der Sender des bekannten Geräts ist an einen Messwandler oder Signalumwandler angeschlossen, welcher ebenfalls kompliziert aufgebaut ist, da er die von dem Objekt reflektierten Schallwellen auch empfangen kann. Die Geschwindigkeit der Bewegung eines Objektes steht senkrecht zur Wellenfront.
Gemäss dem Stand der Technik gibt es die folgenden Möglichkeiten für die Messung der Schussgeschwindigkeit von Fussbällen:
Es ist bekannt, die Schussgeschwindigkeit indirekt durch Messung der Schussweite zu bestimmen. Dieses Verfahren ist aber sehr ungenau, da die Schussweite nicht alleine von der Schussgeschwindigkeit, sondern auch vom Abschusswinkel abhängt. Zudem ist dieses Verfahren sehr zeitraubend, da der Fussball nach jedem Abschuss wieder zur Abschussstelle zurück gebracht werden muss. Es entstehen lange, ungenutzte Wartezeiten.
Messvorrichtungen, welche mit Lichtschranken arbeiten, sind eine andere bekannte Möglichkeit. Diese Messvorrichtungen bestehen aus zwei senkrecht stehenden, rechteckigen Messrahmen, welche in einer definierten Distanz parallel zueinander aufgestellt sind. In den beiden senkrechten Stützen jedes Messrahmens, sind übereinander in regelmässigen Abständen einzelne Lichtschranken angebracht. Der Abstand zwischen zwei Lichtschranken wird etwas kleiner gewählt als der Durchmesser der Fussbälle. Dadurch ist gewährleistet, dass ein Fussball beim Durchqueren der Messrahmen durch mindestens eine der Lichtschranken erfasst wird. Die Schussgeschwindigkeit wird bestimmt, indem man die Zeitdauer misst, welche der Fussball benötigt, um die Strecke zwischen den beiden Messrahmen zurückzulegen. Der Nachteil dieser Messvorrichtung besteht darin, dass sie äusserst umständlich aufzubauen und teuer in der Anschaffung ist. Im weiteren werden Doppler-Radarmessgeräte verwendet. Ein solches Gerät wurde unter anderem bei der Fussballweltmeisterschaft 1990 in Italien eingesetzt. Der Anschaffungspreis für ein Doppler-Radarmessgerät bewegte sich um eine Million Schweizer Franken. Doppler-Radarmessgeräte eignen sich zwar sehr gut für die Messung der Geschwindigkeit von Fussbällen. Ihr Anschaffungspreis ist aber so hoch, dass sich ein einzelner Sportklub das nicht leisten kann.

Eine möglichst hohe Schussgeschwindigkeit wird nicht nur beim Fussball, sondern auch bei anderen Ballspielen wie Tennis oder anderen Sportarten wie Eishockey oder Hornussen angestrebt. In all diesen Sportarten wäre der Einsatz eines Geschwindigkeitsmessgerätes beim Training von Vorteil.

Ein praktisches, einfaches und zugleich kostengünstiges Gerät zur Messung der Geschwindigkeit von bewegten Objekten, das sich unter anderem für den Einsatz im Sport eignen würde, ist bisher nicht bekannt.

Die Erfindung stellt sich daher die Aufgabe, ein praktisches und kostengünstiges Gerät zur Messung der Geschwindigkeit bewegter Objekte zu schaffen.
Die Aufgabe wird mit Hilfe der erfindungsgemässen Merkmale des Patentanspruchs 1 gelöst. Vorteilhafte Weiterbildungen der Erfindung sind Gegenstand der abhängigen Ansprüche.

Mit dem vorgeschlagenen Gerät kann die Geschwindigkeit von Objekten oder Körpern verschiedener Art mittels einfacher Schallwellen durch Ausnützung des Dopplereffekts gemessen werden. Das Geschwindigkeitsmessgerät weist eine Grundeinheit mit einer Bedienungs- und Anzeigeeinheit auf. Die Grundeinheit enthält einen Schallwellensender (Tongenerator) mit mindestens einem Lautsprecher, einen Schallwellenempfänger mit mindestens einem Mikrofon, eine Recheneinheit und, falls gewünscht, eine Anzeigevorrichtung. Für die Geschwindigkeitsmessung wird das Gerät derartig neben die zu erwartende Bewegungslinie des Objektes gestellt, dass sich die Schallwellen und die Bewegungslinie im spitzen oder stumpfen Winkel schneiden. Wenn die Schallwellen auf das Objekt treffen, dann wird ein Teil der Schallwellen vom Objekt reflektiert und erreicht das Mikrofon des Empfängers. Durch die Bewegung des Objektes verändert sich bei der Reflexion die Wellenlänge der Schallwellen. Wenn sich das Objekt dem Geschwindigkeitsmessgerät nähert, dann verringert sich die Wellenlänge der Schallwellen und die Frequenz steigt. Wenn sich das Objekt vom Geschwindigkeitsmessgerät entfernt, dann vergrössert sich die Wellenlänge der Schallwellen und die Frequenz sinkt. Die Differenz zwischen der Sendefrequenz und der Echofrequenz stellt ein direktes Mass für die Geschwindigkeit des Objektes dar. Die Recheneinheit berechnet aus dieser Differenz die Geschwindigkeit des Objektes. Der berechnete Geschwindigkeitswert wird von der Anzeigevorrichtung angezeigt. Die Messung erfolgt innerhalb eines bestimmten Beschallungskegels, dessen Form und Grösse von der Ausgangsleistung des Schallwellensenders und dem Abstrahlwinkel der Lautsprecher abhängt.
Die Erfindung ist im folgenden unter anderem in den Zeichnungen erläutert. Es zeigen:
- Fig. 1a: eine Vorderansicht eines vorgeschlagenen Geschwindigkeitsmessgerätes einer ersten Ausbildungsart;
- Fig. 1b: eine Hinteransicht eines Geschwindigkeitsmessgerätes gemäss Fig. 1a;
- Fig. 1c: eine Seitenansicht eines Geschwindigkeitsmessgerätes gemäss Fig. 1a;
- Fig. 2a: eine Vorderansicht eines vorgeschlagenen Geschwindigkeitsmessgerätes einer zweiten Ausbildungsart;
- Fig. 2b: eine Hinteransicht eines Geschwindigkeitsmessgerätes gemäss Fig. 2a;
- Fig. 2c: eine Seitenansicht eines Geschwindigkeitsmessgerätes gemäss Fig. 2a;
- Fig. 3: eine schematische Darstellung der Messanordnung beim Einsatz eines vorgeschlagenen Geschwindigkeitsmessgerätes;
- Fig. 4: eine perspektivische Teilansicht eines an einem Tennisnetz angebrachten Geschwindigkeitsmessgerätes;
- Fig. 5: eine Draufsicht auf ein Geschwindigkeitsmessgerät einer weiteren Ausbildungsart mit mehreren Grundeinheiten;
- Fig. 6: eine Seitenansicht des Geschwindigkeitsmessgerätes gemäss Fig. 5 in einer um ein Tennisnetz eingebauten Stellung;
- Fig. 7: eine Seitenansicht eines Geschwindigkeitsmessgerätes einer anderen Ausbildungsart mit lediglich einer Grundeinheit zum Anbringen an einem Tennisnetz; und
- Fig. 8: eine Vorderansicht eines vorgeschlagenen Geschwindigkeitsmessgerätes einer weiteren Ausbildungsart.

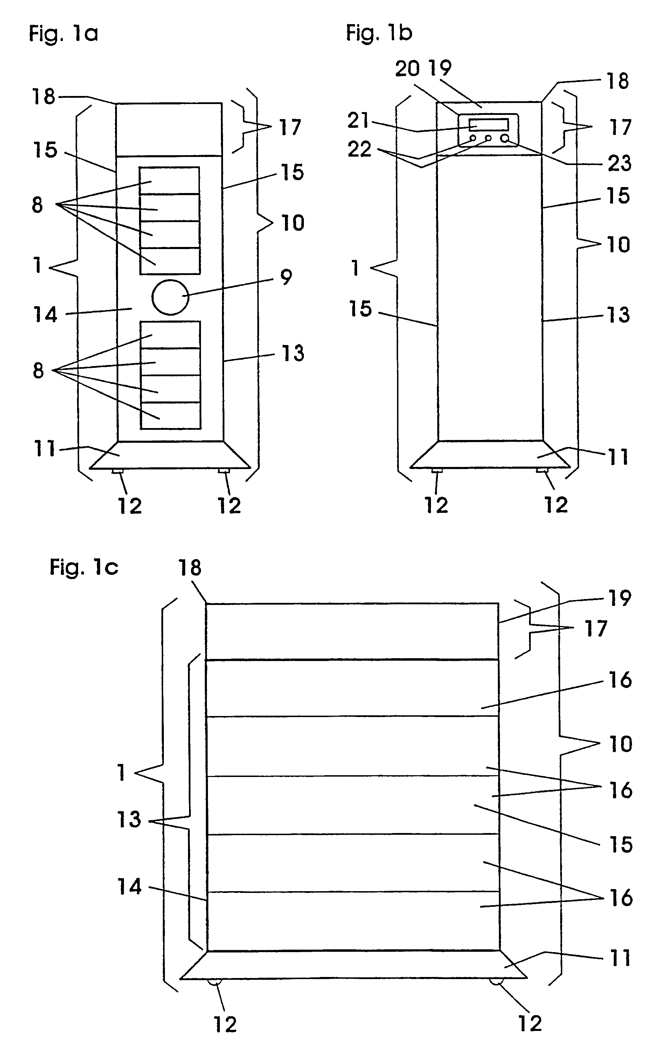

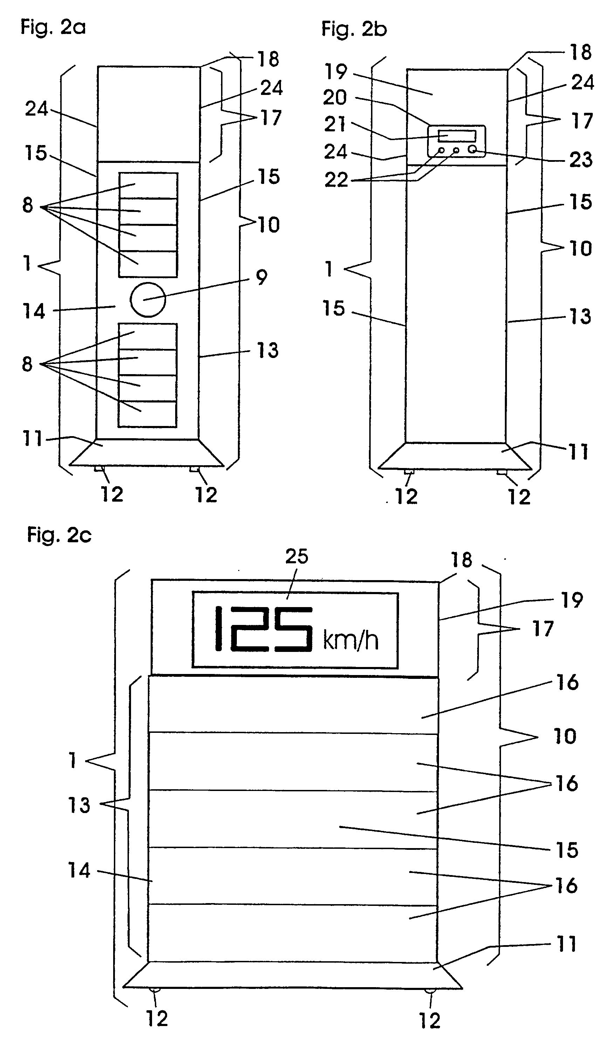

Die Grundeinheit 10 des vorgeschlagenen Geschwindigkeitsmessgerätes 1 weist beim Ausführungsbeispiel gemäss den Fig. 1a bis 2c ein quaderförmiges Gehäuse 13 mit einer Höhe von etwa 160 bis 180 cm, einer Breite von etwa 50 bis 70 cm und einer Länge von etwa 160 bis 180 cm auf. Sie weist ausserdem einen Fuss 11 auf, dessen Form einem Pyramidenstumpf entspricht. Dieser Fuss 11 verbreitert sich gegen unten. An seiner Unterseite ragen vier Rollen 12 hervor. An jeder Ecke des Fusses 11 ist eine dieser Rollen 12 angeordnet. Im Gehäuse 13 sind ein Schallwellensender 8, ein Schallwellenempfänger 9, eine Recheneinheit und eine Anzeigevorrichtung 21 (siehe Fig. 1b) bzw. 25 (siehe Fig. 2c) untergebracht. Die Grundeinheit 10 ist beim Ausführungsbeispiel mit acht Schallwellensendern 8 in Form von Lautsprechern und einem Schallwellenempfänger 9 in Form eines Mikrofons ausgestattet. Die Lautsprecher 8 und das Mikrofon 9 befinden sich an der vorderen Stirnseite 14 des Gehäuses 13 (vgl. Fig. 1a und 2a). Das Mikrofon 9 ist im Zentrum dieser Stirnseite 14 angeordnet. Eine erste Gruppe von vier übereinanderliegenden Lautsprechern 8 befindet sich oberhalb des Mikrofons 9. Eine zweite Gruppe von vier übereinanderliegenden Lautsprechern 8 ist unterhalb des Mikrofons 9 angeordnet.
An jeder Seitenwand 15 des Gehäuses 13 können mehrere rechteckige Platten 16, welche als Werbeträger dienen, lösbar befestigt werden (vgl. Fig. 1c und 2c). Beim Ausführungsbeispiel ist eine derartige Platte 16 gleich lang wie das Gehäuse 13. Ihre Höhe entspricht etwa 20 % der Gehäusehöhe, so dass an einer Gehäuseseitenwand 15 übereinander fünf Platten 16 Platz haben. Die Platten 16 können am Gehäuse 13 beispielsweise angeschraubt werden. Es sind jedoch beliebige andere formschlüssige Verbindungen denkbar.
Es ist ausserdem eine kleinere (nicht gezeigte) Ausbildungsart des Gehäuses 13 vorgesehen, an dem keine Platte 16 befestigt werden kann.
Eine Bedienungs- und Anzeigeeinheit 17 bildet beim Ausführungsbeispiel den oberen Teil der Grundeinheit 10.
Eine erste Ausbildungsart der Bedienungs- und Anzeigeeinheit 17 umfasst ein quaderförmiges, niedriges Gehäuse 18, dessen Breite und Länge der Breite und Länge des Gehäuses 13 der Grundeinheit 10 entsprechen (vgl. Fig. 1a bis 1c). An der hinteren Stirnseite 19 des Gehäuses 18 ist ein Bedienungstableau 20 mit einer kleinen, ersten Anzeigevorrichtung 21, mehreren Bedienungsknöpfen 22 und einem Hauptschalter 23 angeordnet (vgl. Fig. 1b). Die Anzeigevorrichtung 21 dient zur Anzeige der gemessenen Geschwindigkeit. Einer der Bedienungsknöpfe 22 dient zum Rückstellen des Geschwindigkeitsmessgerätes 1. Mit dem Hauptschalter 23 wird das Geschwindigkeitsmessgerät 1 ein- und ausgeschaltet.
Eine zweite Ausbildungsart der Bedienungs- und Anzeigeeinheit 17 umfasst ein quaderförmiges, hohes Gehäuse 18, dessen Breite und Länge ebenfalls der Breite und Länge des Gehäuses 13 der Grundeinheit 10 entsprechen. Beim Ausführungsbeispiel sind die Höhe und die Breite des Gehäuses 18 der Bedienungs- und Anzeigeeinheit 17 etwa gleich gross (vgl. Fig. 2a und 2b). An der hinteren Stirnseite 19 des Gehäuses 18 ist ebenfalls ein Bedienungstableau 20 angeordnet, das gleich ausgebildet ist wie bei der ersten Ausbildungsart der Bedienungs- und Anzeigeeinheit 17. Zusätzlich zur kleinen, ersten Anzeigevorrichtung 21 des Bedienungstableaus 20 weist die Bedienungs- und Anzeigeeinheit 17 der zweiten Ausbildungsart an mindestens einer Gehäuseseitenfläche 24 eine grosse, zweite Anzeigevorrichtung 25 auf (vgl. Fig. 2c) .
Eine weiterenentwickelte Ausbildungsart des vorgeschlagenen Geschwindigkeitsmessgeräts 1 ist mit Mikroprozessoren und einer Funkfernbedienung ausgerüstet. Ausserdem ist die Möglichkeit vorgesehen, das Geschwindigkeitsmessgerät 1 mit einer Anschlussmöglichkeit für Personal Computer zu versehen. Mit Hilfe eines Personal Computers können die Geschwindigkeitswerte unter anderem besser dargestellt und beispielsweise pro Person geordnet abgelegt werden.

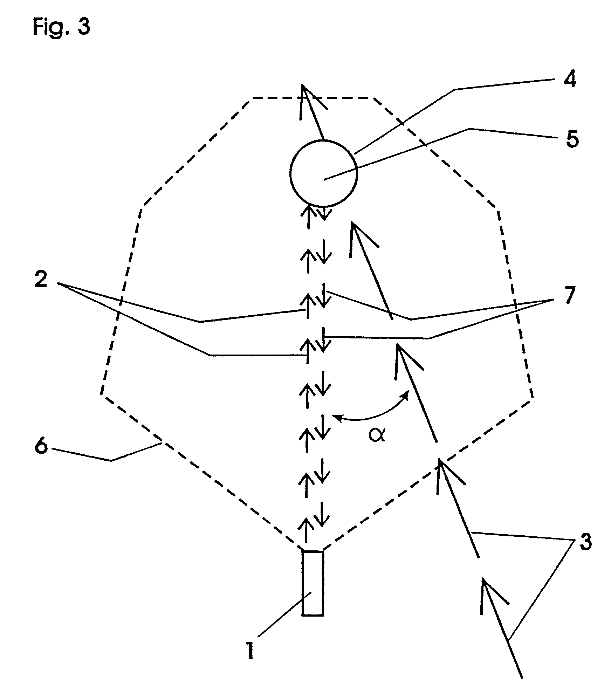

Für die Messung der Geschwindigkeit eines Objektes 4 wird das vorgeschlagene Gerät 1 derartig seitlich der erwarteten Bewegungslinie 3 des Objektes 4 aufgestellt, dass sich die erzeugten Schallwellen 2 und die Bewegungslinie 3 innerhalb des Beschallungskegels 6 im spitzen Winkel α kreuzen (vgl. Fig. 3). Die Form und Grösse des Beschallungskegels 6 sind von der Ausgangsleistung des Senders und der Empfindlichkeit des Mikrofons 9 sowie vom Abstrahlwinkel der Lautsprecher 8 abhängig.
Sobald das Geschwindigkeitsmessgerät 1 eingeschaltet wird, strahlt es über seine Lautsprecher 8 Schallwellen 2 aus. Es ist dabei unbedeutend, welche Frequenz diese Schallwellen 2 haben. Vorzugsweise werden aber Frequenzen ausserhalb des Hörbereiches des Menschen gewählt. Sie können auch im Ultraschallbereich liegen, d.h. eine Frequenz von über 20 Kilohertz (kHz) aufweisen.
Die ausgesandten Schallwellen 2 bewegen sich in Richtung der voraussichtlichen Bewegungslinie 3 des zu messenden Objektes 4 und kreuzen sich in einem Kreuzungspunkt 5 mit der voraussichtlichen Bewegungslinie 3. Während der Zeitspanne, in welcher sich das zu messende Objekt 4 innerhalb des Beschallungskegels 6 befindet, reflektiert es die Schallwellen 2, welche auf ihm auftreffen. Ein Teil der reflektierten Schallwellen 7 kehrt zum Geschwindigkeitsmessgerät 1 zurück und wird vom Mikrofon 9 aufgenommen. Die Aufnahme geschieht vorzugsweise selektiv. Bei einer Sendefrequenz von etwa 21 Kilohertz kann der aufgenommene Frequenzbereich beispielsweise zwischen 16 und 29 Kilohertz liegen. Dadurch werden Störungen eingeschränkt. Eine weitere Einschränkung der Störungen kann erreicht werden, indem die Schallwellen 2 gepulst, codiert oder moduliert abgegeben werden. Die verschiedenen Modulationsarten dienen ebenfalls der Störungsbegrenzung. Das Mikrofon 9 wandelt den Schall in elektronische Signale um und leitet diese zur Recheneinheit weiter.
Durch die Bewegung des Objektes 4 wird die Wellenlänge der reflektierten Schallwellen 7 verändert. Die Wellenlänge vergrössert sich, wenn sich das Objekt 4 vom Geschwindigkeitsmessgerät 1 entfernt. Die Frequenz der Schallwellen 7 wird dadurch niedriger. Die Wellenlänge verkürzt sich, wenn sich das Objekt 4 dem Geschwindigkeitsmessgerät 1 nähert. Die Frequenz der Schallwellen 7 wird dadurch höher. Diese Differenz zwischen der Sendefrequenz und der Echofrequenz ist ein direktes Mass für die Geschwindigkeit des Objektes 4. Je grösser die Differenz ist, um so höher ist die Geschwindigkeit. Die Recheneinheit wertet die vom Mikrofon 9 kommenden elektronischen Signale aus. Sie ermittelt die Differenz zwischen der Sende- und der Echofrequenz und berechnet anschliessend daraus die Geschwindigkeit des zu messenden Objektes 4. Während sich das bewegte Objekt 4 innerhalb des Beschallungskegels 6 befindet, können mehrere Messungen gemacht werden. Von den entsprechenden Geschwindigkeitswerten wird beispielsweise der Maximalwert ausgewählt. Eine andere Möglichkeit besteht darin, aus den Geschwindigkeitswerten einen Mittelwert zu bilden. Der ermittelte Geschwindigkeitswert wird durch die Anzeigevorrichtung 21 bzw. die Anzeigevorrichtungen 21, 25 angezeigt.
Bei der beschriebenen Messanordnung (vgl. Fig. 3) ist das Geschwindigkeitsmessgerät 1 stationär, während sich das Objekt 4 bewegt. Es ist jedoch auch möglich, Messanordnungen zu wählen, bei denen sich das Geschwindigkeitsmessgerät 1 bewegt und das Objekt stationär ist.

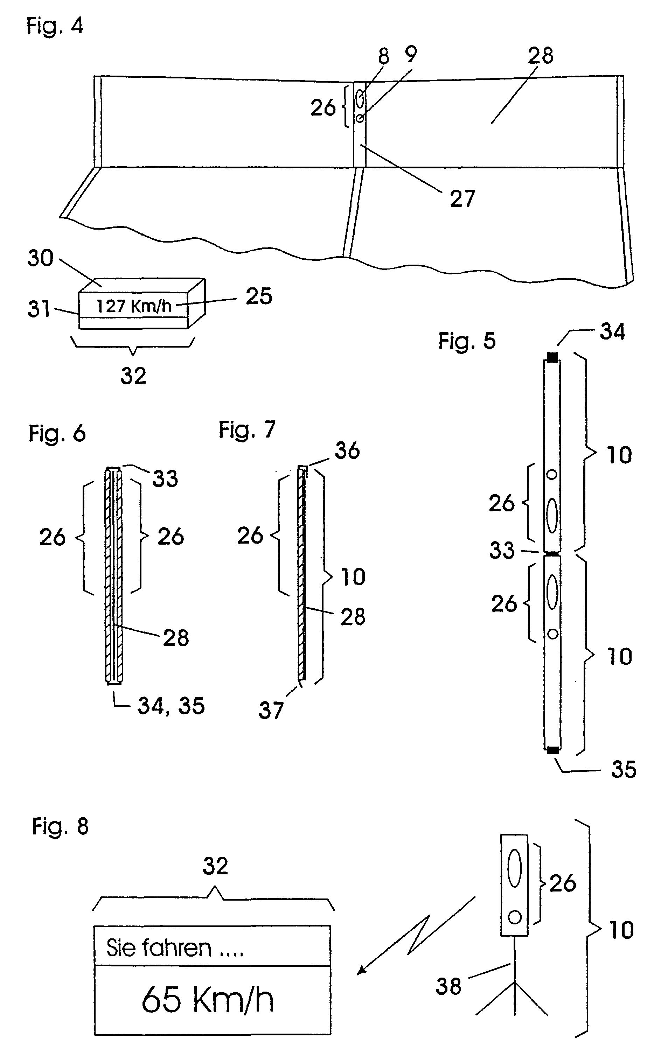

Gemäss einer weiteren Ausbildungsart der Erfindung, welche in Fig. 4 dargestellt ist, sind die einzelnen Komponenten der Grundeinheit 10, teilweise voneinander getrennt, an unterschiedlichen Orten positioniert. Dies betrifft zum einen den Schallwellensender 8 und den Schallwellenempfänger 9, welche, zu einer Sende- und Empfangseinheit 26 zusammengefasst, im gewählten Ausführungsbeispiel das Mittelband 27 eines Tennisnetzes 28 bilden oder in dieses integriert sind. Zum anderen ist die Recheneinheit 30 zusammen mit der Anzeigevorrichtung 25 separat von der Sende- und Empfangseinheit 26 in einem eigenen Gehäuse 31 neben dem Spielfeld untergebracht. Bei diesem Ausführungsbeispiel bilden die Recheneinheit 30 und die Anzeigevorrichtung 25 eine Rechen- und Anzeigeeinheit 32.
Die gemessenen, die Geschwindigkeitssignale enthaltenden Daten werden bei dem in Fig. 4 gezeigten Ausführungsbeispiel per Funk an die Recheneinheit 30 übermittelt. Es ist aber auch möglich, die gemessenen Daten durch eine nicht näher gezeigte Drahtübermittlung an die Recheneinheit 30 zu übertragen.
Bei dem in Fig. 4 dargestellten Ausführungsbeispiel ist die Grundeinheit 10 also in eine Sende- und Empfangseinheit 26 und in eine separat davon aufgestellte Rechen- und Anzeigeeinheit 32 aufgeteilt.

Eine Erweiterung der in Fig. 4 gezeigten Ausbildungsart ist in Fig. 5 in einer Draufsicht dargestellt. Zwei Grundeinheiten 10 sind mittels eines lediglich schematisch angedeuteten Scharniers 33 miteinander verbunden, wobei in der dargestellten Ausbildungsart lediglich zwei Sende- und Empfangseinheiten 26 der Grundeinheiten 10 dargestellt sind. An einem, in Fig. 5 rechts dargestellten Ende ist eine Schnalle 34 zum Befestigen dieser Grundeinheit unter dem Netz, an dem gegenüberliegenden, anderen Ende das jeweilige Gegenstück 35 der Schnalle 34 angebracht.

In Fig. 6 sind die miteinander verbundenen Sende- und Empfangseinheiten 26 in einer Seitenansicht dargestellt, wobei eine der Sende- und Empfangseinheiten 26 auf einer Seite des Tennisnetzes 28 und die andere der Sende- und Empfangseinheiten 26 auf der gegenüberliegenden, anderen Seite des Tennisnetzes 28 angeordnet ist. Beide Sende- und Empfangseinheiten sind auf ihrer in Fig. 6 gezeigten Oberseite über das Scharnier 33 und auf ihrer Unterseite mittels der Schnalle 34 und dem Gegenstück 35 miteinander verbunden und an dem Tennisnetz 28 gehalten. Vorzugsweise bilden die Sende- und Empfangseinheiten das Mittelband 27 des Tennisnetzes 28, wie dies in Fig. 4 beispielhaft verdeutlicht ist.
Bei dem in Fig. 6 gezeigten Ausführungsbeispiel sind demnach zwei Grundeinheiten 10 zum Messen der Geschwindigkeit eines Tennisballes am Mittelband des Tennisnetzes derart vorgesehen, dass die jeweiligen, in Fig. 6 nicht gezeigten Beschallungskegel einander gegenüberliegend angeordnet sind, sich demnach nicht überschneiden und unterschiedlichen Spielfeldhälften zugeordnet sind. Es ist klar, dass der jeweilige Schallwellensender 8 und der jeweilige Schallwellenempfänger 9 der Grundeinheiten 10 im Falle der Ausführungsformen gemäss den Fig. 4 und 6 in das Mittelband 27 des Tennisnetzes 28 eingebaut oder in dieses integriert sind.
Im Falle der in Fig. 6 gezeigten Ausbildungsart kann die Geschwindigkeit des Tennisballes, welcher von der einen Spielfeldhälfte in die andere Spielfeldhälfte geschlagen wird, mit dem erfindungsgemässen Geschwindigkeitsmessgerät zweimal ermittelt werden, nämlich einmal, wenn sich der Tennisball auf die zum Tennisspieler weisende, erste Grundeinheit 10 hinbewegt, und zum zweiten, wenn sich der Tennisball von der dem Tennisspieler abgewandten, zweiten Grundeinheit wegbewegt. Im ersten Fall (die Sende- und Empfangseinheit ist dem Spieler zugewandt) bildet sich zwischen der erzeugten Schallwelle und der Bewegungslinie des Balles zum Kreuzungspunkt üblicherweise ein stumpfer Winkel, im zweiten Fall (die Sende- und Empfangseinheit ist vom Spieler abgewandt) ein beispielhaft in Fig. 3 gezeigter spitzer Winkel α aus. Wie zuvor erwähnt, ist die Rechen- und Anzeigeeinheit in dem letztgenannten Ausführungsbeispiel vorzugsweise neben dem Spielfeld aufgestellt. Es ist klar, dass das Geschwindigkeitsgemessgerät auch so eingestellt werden kann, dass bei der in Fig. 6 gezeigten Ausbildungsart die Geschwindigkeit des Tennisballes lediglich bezogen auf eine Spielfeldhälfte ermittelt und angezeigt wird.

In Fig. 7 ist eine Seitenansicht eines Teils der Grundeinheit 10 in Form einer Sende- und Empfangseinheit 26 gezeigt. Bei dieser Ausführungsform ist also lediglich eine Grundeinheit 10 mittels einer U-förmigen Halterung 36 an das Tennisnetz 28 gehängt, wobei auch in diesem Fall am, in Fig. 7 unteren Ende der Grundeinheit 10 eine Befestigungsvorrichtung 37, beispielsweise in Form eines Karabinerhakens, vorgesehen ist. In Fig. 7 ist die Befestigungsvorrichtung 37 der Einfachheit halber lediglich schematisch angedeutet. Es ist klar, dass der in Fig. 7 dargestellte Teil der Grundeinheit 10 mit Hilfe der Halterung 36 zu Übungszwecken auch an einer nicht dargestellten Tenniswand angebracht werden kann, gegen die ein oder mehrere Tennisspieler zu Trainingszwecken spielen.

Eine weitere Ausbildungsart ist in Fig. 8 beispielsweise für den Einsatz im Strassenverkehr gezeigt. Auch in diesem Fall besteht die Grundeinheit 10 aus einer Sende- und Empfangseinheit 26, welche mittels eines Standfusses 38 z. B. an einer Strasse aufgestellt ist, und aus einer separat davon positionierten Rechen- und Anzeigeeinheit 32, auf der die gemessene Geschwindigkeit des Fahrzeugs angezeigt wird. Somit kann das erfindungsgemässe Geschwindigkeitsmessgerät auch im Strassenverkehr, beispielsweise für polizeiliche Messungen, eingesetzt werden.

Das Geschwindigkeitsmessgerät 1 kann netzunabhängig arbeiten. Als Stromquelle dient in diesem Falle vorzugsweise ein wiederaufladbarer Akkumulator, welcher in der Grundeinheit 10 untergebracht sein kann. Die Grundeinheit 10 ist mit einer Vorrichtung ausgestattet, welche den Ladungszustand des Akkumulators ständig überprüft. Ist die Energie des Akkumulators soweit verbraucht, dass das Geschwindigkeitsmessgerät 1 nur noch eine halbe Stunde betrieben werden kann, wird auf der kleinen, optischen Anzeigevorrichtung 21 die Warnung "LOW BATTERIE" ausgegeben. Zum Aufladen des Akkumulators ist an der Grundeinheit 10 ein Anschluss für ein Ladegerät vorgesehen. Das Geschwindigkeitsmessgerät 1 kann aber auch ans Netz angeschlossen werden.
Das vorgeschlagene Gerät 1 ist für die Messung der Geschwindigkeit von Objekten verschiedenster Art geeignet.
Ein mögliches Anwendungsgebiet ist, wie bereits zuvor erwähnt, der Sport. Das Geschwindigkeitsmessgerät 1 kann auch für die Bestimmung der Geschwindigkeit von Fussbällen bei Freistössen, Pässen, Penaltys etc. eingesetzt werden. Es kann sowohl zur Kontrolle des Trainingserfolgs als auch als Attraktion bei einem Fussballspiel dienen. Im letzteren Falle wird das Geschwindigkeitsmessgerät 1 in der Spielpause vor ein Fussballtor gerollt, was dank der Rollen 12 im Fuss 11 der Grundeinheit 10 problemlos möglich ist. Das Publikum oder die Junioren haben dann die Möglichkeit, Penaltys zu schiessen und dabei die selbst erreichte Fluggeschwindigkeit des Fussballes messen zu lassen. Die Werbung auf den seitlichen Werbeflächen des Geschwindigkeitsmessgerätes 1 kommt in dieser Situation zur Geltung.

Das vorgeschlagene Geschwindigkeitsmessgerät 1 weist gegenüber den bekannten Geschwindigkeitsmessvorrichtungen bzw. - geräten wesentliche Vorteile auf.
Bei Messvorrichtungen, welche mit Lichtschranken arbeiten, müssen grosse Messrahmen aufgebaut werden. Das erfindungsgemässe Geschwindigkeitsmessgerät 1 benötigt keine derart aufwendigen Konstruktionen. Es ist ohne jede Vorbereitung einsatzbereit. Es wird einfach seitlich der zu erwartenden Bewegungslinie 3 des zu messenden Objektes 4 aufgestellt. Wegen der einfacheren Konstruktionsweise ist der Anschaffungspreis des erfindungsgemässen Geschwindigkeitsmessgerätes 1 wesentlich günstiger als derjenige der Messvorrichtungen mit Lichtschranken.
Obwohl der Anschaffungspreis des erfindungsgemässen Geschwindigkeitsmessgerätes 1 wesentlich kleiner ist als der Anschafschaffungspreis der Messgeräte, die mit Doppler-Radar arbeiten, verfügt es über die gleiche Leistungsfähigkeit und liefert ebenso genaue Messresultate. Die Herstellungskosten sind deshalb so viel niedriger, weil bei Schallwellen der technische Aufwand für die Erzeugung, die Ausstrahlung und den Empfang wesentlich kleiner und kostengünstiger ist als bei Radarwellen.
Verglichen mit dem vor allem im Fussballtraining eingesetzten Verfahren, bei welchem man die Schussweite misst, hat das erfindungsgemässe Geschwindigkeitsmessgerät 1 den Vorteil, dass es genauere Resultate liefert und erst noch weniger zeitraubend ist.

Abschliessend kann gesagt werden, dass das vorgeschlagene Geschwindigkeitsmessgerät 1 sehr praktisch und kostengünstig ist. Es ist in der Lage, innerhalb seines Beschallungskegels 6 die Geschwindigkeit von Objekten verschiedenster Art zu messen und auszuwerten. Dank seiner Vorteile wird es auf dem Markt auf grosses Interesse stossen.

## Patentansprüche

1. Messgerät zum Bestimmen der Geschwindigkeit von Objekten (4) verschiedener Art unter Ausnutzung des Dopplereffektes aus der Differenz zwischen der Frequenz der mittels wenigstens eines Schallwellensenders (8) erzeugten Schallwellen, Sendefrequenz genannt, und der Frequenz der mittels wenigstens eines Schallwellenempfängers (9) empfangenen Schallwellen, Echofrequenz genannt,
**dadurch gekennzeichnet, dass**
eine mindestens den einen Schallwellensender (8), den einen Schallwellenempfänger (9) und eine Recheneinheit aufweisende Grundeinheit (10) vorgesehen ist,
der mindestens eine Schallwellensender einen Lautsprecher (8) und der mindestens eine Schallwellenempfänger ein Mikrophon (9) aufweist und
dass die erzeugten Schallwellen (2) und die Bewegungslinie (3) des Objektes (4) innerhalb des Beschallungskegels (6) einen spitzen oder einen stumpfen Winkel (α) einschliessen.

2. Messgerät nach Anspruch 1, **dadurch gekennzeichnet, dass** die Grundeinheit (10) wenigstens eine Vorrichtung (21, 25) zum Anzeigen der ermittelten Geschwindigkeit aufweist.

3. Messgerät nach Anspruch 1 oder 2, **dadurch gekennzeichnet, dass** die einzelnen Komponenten der Grundeinheit (10) sämtlich in einem einzigen Gehäuse (13) oder, räumlich zumindest teilweise voneinander getrennt, an unterschiedlichen Orten positioniert sind.

4. Messgerät nach einem der Ansprüche 1 bis 3, **dadurch gekennzeichnet, dass** die Grundeinheit (10) ein quaderförmiges Gehäuse (13) hat, an dessen vorderer Stirnseite (14) der mindestens eine Schallwellenempfänger (9) im Zentrum, eine erste Gruppe von vier übereinanderliegenden Schallwellensendern (8) oberhalb und eine zweite Gruppe von vier übereinanderliegenden Schallwellensendern (8) unterhalb des mindestens einen Schallwellenempfängers (9) angeordnet ist.

5. Messgerät nach einem der vorhergehenden Ansprüche, **dadurch gekennzeichnet, dass** die Grundeinheit (10) eine Bedienungs- und Anzeigeeinheit (17) aufweist, die ein quaderförmiges Gehäuse (18) mit einer hinteren Stirnseite (19) hat, an der ein Bedienungstableau (20), vorzugsweise mit einer ersten Anzeigevorrichtung (21), mehreren Bedienungsknöpfen (22) und einem Hauptschalter (23), angeordnet ist.

6. Messgerät nach Anspruch 5, **dadurch gekennzeichnet, dass** die Bedienungs- und Anzeigeeinheit (17) zusätzlich zur ersten Anzeigevorrichtung (21) des Bedienungstableaus (20) an mindestens einer Gehäuseseitenfläche (24) eine grosse, zweite Anzeigevorrichtung (25) aufweist.

7. Messgerät nach einem der Ansprüche 1 bis 4, **dadurch gekennzeichnet, dass** der mindestens eine Schallwellensender (8) und der mindestens Schallwellenempfänger (9) eine Sende- und Empfangseinheit (26) und dass die Recheneinheit (30) zusammen mit der wenigstens einen Anzeigevorrichtung (21, 25) eine separat von der Sende- und Empfangseinheit (26) positionierte Rechen- und Anzeigeeinheit (32) bilden.

8. Messgerät nach einem der vorhergehenden Ansprüche, **dadurch gekennzeichnet, dass** die gemessenen, die Geschwindigkeitssignale enthaltenden Daten drahtlos, vorzugsweise per Funk, oder' durch eine Drahtübermittlung an die Recheneinheit übertragbar sind.

9. Messgerät nach einem der vorhergehenden Ansprüche, **dadurch gekennzeichnet, dass** mehrere Grundeinheiten (10) vorzugsweise zum Messen der Ballgeschwindigkeit bei Spielen unter Verwendung eines Netzes derart vorgesehen sind, dass die Beschallungskegel (6) der Grundeinheiten (10) sich nicht überschneiden und vorzugsweise unterschiedlichen Spielfeldhälften zugeordnet sind.

10. Messgerät nach einem der vorhergehenden Ansprüche, **dadurch gekennzeichnet, dass** der mindestens eine Schallwellensender (8) und der mindestens eine Schallwellenempfänger (9) in ein Band, vorzugsweise das Mittelband (27) eines Tennisnetzes (28), eingebaut oder integriert sind.

11. Messgerät nach einem der vorhergehenden Ansprüche, **dadurch gekennzeichnet, dass** die Sendefrequenz ausserhalb des Hörbereichs des Menschen, vorzugsweise im Ultraschallbereich über 20 kHz, liegt.

12. Messgerät nach einem der vorhergehenden Ansprüche, **dadurch gekennzeichnet, dass** die Aufnahme der reflektierten Schallwellen (7) selektiv erfolgt und der Bereich der Echofrequenz zwischen 16 und 29 kHz bei einer Sendefrequenz von etwa 21 kHz liegt.

13. Messgerät nach einem der vorhergehenden Ansprüche, **dadurch gekennzeichnet, dass** die Abgabe der erzeugten Schallwellen (2) gepulst, codiert oder moduliert erfolgt.

## Claims

1. Multipurpose (4) velocity-measuring device utilising the Doppler-effect in the difference between the frequencies sent by no less than one sound wave emitter (8), known as emitting frequency, and the frequency of the sound waves received by no less than one sound wave receiver (9), known as echo frequency, **further identified by** no less than one sound wave emitter (8), one sound wave receiver (9), and one computing unit, contained within a base unit (10), no less than one loudspeaker per sound wave emitter (8) and one microphone per sound wave receiver (9), created sound waves (2) and the object (4) line of movement (3) intersecting each other within a detection zone (6) in an acute or obtuse angle (α).

2. Velocity-measuring device, per specification 1, **identified** via no less than one display (21, 25) on the base unit (10) showing the detected velocity.

3. Velocity-measuring device, per specifications 1 or 2, **identified** via the placement of the part components of the base unit (10) within a single casing (13) or spatially positioned separately from each other.

4. Velocity-measuring device, per specifications 1 to 3, **identified** via the rectangular casing (13) of the base unit (10) on which upper front side (14) there is centrally positioned no less than one sound wave receiver (9), a first group of sequentially positioned sound wave emitters (8) above, and a second group of sequentially positioned sound wave emitters (8) below no less than one sound wave receiver (9).

5. Velocity-measuring device, per one of the abovementioned specifications, **identified** via the positioning of a rectangular case (18) control-display unit (17) rear front side (19) on which there exists a control table (20), preferably with a display screen (21), several control buttons (22) and a main switch (23) on the base unit (10).

6. Velocity-measuring device, per specification 5, **identified** via a large, secondary display screen (25) on no less than one side of the command-display unit (17) casing (24) in addition to the first display screen (21) of the control table (20).

7. Velocity-measuring device, per specifications 1 to 4, **identified** via no less than one sound wave emitter (8) and no less than one sound wave receiver (9), an emitting-receiving unit (26) and the computing unit (30) together with no less than one display screen (21, 25) comprising a computing-display unit (32) separate from the emitting-receiving unit (26).

8. Velocity-measuring device, per one of the abovementioned specifications, **identified** via the fact that the data consisting of detected velocity measurements may be transmitted to the computing unit either via radio link or cable.

9. Velocity-measuring device, per one of the abovementioned specifications, **identified** via the placement of several base units (10) for measurement of ball velocities in games using a net in such a way that the detection zones (6) of the base units (10) do not intersect and preferably cover different halves of the playing field.

10. Velocity-measuring device, per one of the abovementioned specifications, **identified** via integration or placement of no less than one sound wave emitter (8) and no less than one sound wave receiver (9) in the middle part (27) of a tennis net (28).

11. Velocity-measuring device, per one of the abovementioned specifications, **identified** via placement of emitting frequency beyond the human auditory range, preferably within the ultrasound zone exceeding 20 kHz.

12. Velocity-measuring device, per one of the abovementioned specifications, **identified** via selective receiving of reflected sound waves (7) falling between 16 and 29 kHz at an emitting frequency of 21 kHz.

13. Velocity-measuring device, per one of the abovementioned specifications, **identified** via pulsed, coded, or modulated emission of created sound waves (2).

## Revendications

1. Appareil de mesure destiné à la détermination de la vitesse d'objets (4) de nature diverse par utilisation de l'effet Doppler, à partir de la différence entre la fréquence de l'onde sonore, dite fréquence d'émission, produite à l'aide d'au moins un émetteur d'ondes sonores (8), et la fréquence de l'onde sonore, dite fréquence d'écho, reçue par au moins un récepteur d'ondes sonores (9), **caractérisé en ce que** l'on prévoit une unité de base (10), présentant au moins un émetteur d'ondes sonores (8), un récepteur d'ondes sonores (9) et une unité calculatrice, **en ce qu'**au moins un émetteur d'ondes sonores présente un haut-parleur (8) et au moins un récepteur d'ondes sonores présente un microphone (9) et **en ce que** les ondes sonores produites (2) et les lignes de mouvement (3) de l'objet (4) englobent un angle aigu ou un angle obtus (α) au sein du cône d'émission sonore (6).

2. Appareil de mesure selon la revendication 1, **caractérisé en ce que** l'unité de base (10) présente au moins un dispositif (21, 25) destiné à l'indication de la vitesse déterminée.

3. Appareil de mesure selon la revendication 1 ou 2, **caractérisé en ce que** les composants individuels de l'unité de base (10) sont tous positionnés dans un boîtier unique (13) ou le sont en étant au moins partiellement séparés les uns des autres dans l'espace, en différents endroits.

4. Appareil de mesure selon l'une quelconque des revendications 1 à 3, **caractérisé en ce que** l'unité de base (10) possède un boîtier parallélépipédique (13), sur la face avant duquel (14) l'on dispose, par rapport à au moins un récepteur d'ondes sonores (9), qui se trouve en son centre, au-dessus, un premier groupe de quatre émetteurs d'ondes sonores superposés (8) et, en dessus, un deuxième groupe de quatre émetteurs d'ondes sonores superposées (8).

5. Appareil de mesure selon l'une quelconque des revendications précédentes, **caractérisé en ce que** l'unité de base (10) présente une unité de maniement et d'indication (17), qui possède un boîtier parallélépipédique (18) à face frontale arrière (19), sur laquelle l'on dispose un tableau de commande (20), avec de préférence un dispositif d'indication (21), plusieurs boutons de maniement (22) et un commutateur principal (23).

6. Appareil de mesure selon la revendication 5, **caractérisé en ce que** l'unité de maniement et d'indication (17) présente, outre le premier dispositif d'indication (21) du tableau de commande (20), sur au moins une face latérale du boîtier (24), un deuxième dispositif d'indication de grande taille (25).

7. Appareil de mesure selon l'une quelconque des revendications 1 à 4, **caractérisé en ce qu'**au moins un émetteur d'ondes sonores (8) et au moins un récepteur d'ondes sonores (9) constituent une unité d'émission et de réception (26) et **en ce que** l'unité calculatrice (30), conjointement à au moins un dispositif d'indication (21, 25), constitue une unité de calcul et d'indication (32) positionnée d'une manière séparée de l'unité d'émission et de réception (26).

8. Appareil de mesure selon l'une quelconque des revendications précédentes, **caractérisé en ce que** les données mesurées, contenant les signaux de vitesse, peuvent être transmises à l'unité calculatrice sans fil, de préférence par radio ou par l'intermédiaire d'une transmission à fils.

9. Appareil de mesure selon l'une quelconque des revendications précédentes, **caractérisé en ce que** l'on prévoit plusieurs unités de base (10), de préférence en vue de la mesure de la vitesse de balles lors de jeux utilisant un filet, de telle manière que les cônes d'émission sonore (6) des unités de base (10) ne se recoupent pas et sont attribuées de préférence à des moitiés différentes du terrain de jeux.

10. Appareil de mesure selon l'une quelconque des revendications précédentes, **caractérisé en ce qu'**au moins un émetteur d'ondes sonores (8) et au moins un récepteur d'ondes sonores (9) soient incorporés ou intégrés dans une bande, de préférence dans la bande médiane (27) d'un filet de tennis (28).

11. Appareil de mesure selon l'une quelconque des revendications précédentes, **caractérisé en ce que** la fréquence d'émission se situe à l'extérieur du domaine auditif de l'homme, de préférence dans le domaine ultrasonique au-dessus de 20 kHz.

12. Appareil de mesure selon l'une quelconque des revendications précédentes, **caractérisé en ce que** l'absorption des ondes sonores réfléchies (7) a lieu d'une manière sélective et **en ce que** le domaine de la fréquence d'écho se situe, pour une fréquence d'émission d'environ 21 kHz, dans un domaine compris entre 16 et 29 kHz.

13. Appareil de mesure selon l'une quelconque des revendications précédentes, **caractérisé en ce que** l'émission des ondes sonores produites a lieu d'une manière pulsée, codée ou modulée.
